# EUROPÄISCHE PATENTSCHRIFT

(11) **EP 3 519 278 B1**
(45) Veröffentlichungstag und Bekanntmachung des Hinweises auf die Patenterteilung: **26.08.2020**
(21) Anmeldenummer: 17777549.1
(22) Anmeldetag: 25.09.2017
(51) Int. Cl.: B62D 25/04, B62D 21/15

(54) **STRUKTURBAUTEIL FÜR EINE KRAFTFAHRZEUGKAROSSERIE**
STRUCTURAL COMPONENT FOR A MOTOR VEHICLE BODY
ÉLÉMENT STRUCTURAL POUR UNE CARROSSERIE DE VÉHICULE AUTOMOBILE

(30) Priorität: 28.09.2016 DE 102016118366
(43) Veröffentlichungstag der Anmeldung: 07.08.2019
(73) Patentinhaber: Muhr und Bender KG, 57439 Attendorn (DE)
(72) Erfinder: WALCH, Johannes, 85375 Neufahrn bei Freising (DE); STEIN, Michael, 85244 Röhrmoos (DE); STEFFENS, Hubertus, 57489 Drolshagen (DE)
(74) Vertreter: Neumann Müller Oberwalleney & Partner Patentanwälte
(86) Internationale Anmeldenummer: PCT/EP2017/074252
(87) Internationale Veröffentlichungsnummer: WO 2018/060143

(56) Entgegenhaltungen:
- WO-A1-2015/146903
- WO-A2-2015/107227
- DE-A1-102013 114 108
- DE-B4-102013 011 679
- JP-A- 2001 310 762

## Beschreibung

Die vorliegende Erfindung betrifft ein Strukturbauteil, insbesondere für eine Kraftfahrzeugkarosserie, mit einem kaltumgeformten ersten Formteil und einem warmumgeformten und gehärteten zweiten Formteil, das einen Verbindungsabschnitt zum Verbinden mit dem ersten Formteil aufweist, sowie ein Verfahren zur Herstellung eines solchen Strukturbauteils.

Aus der US 8 491 047 B1 ist eine B-Säule für eine Kraftfahrzeugkarosserie bekannt. Die B-Säule umfasst ein Innenformteil, ein hiermit verbundenes hutförmiges Abstützungselement sowie ein Außenformteil. Das Innenformteil und das Außenformteil haben seitliche Flanschabschnitte, die miteinander verbunden sind. Das Abstützungselement ist mit seinen Flanschabschnitten an einer Innenfläche des Innenformteils angeschweißt und erstreckt sich in Richtung zum Außenformteil, wobei zwischen dem Bodenabschnitt des Abstützungselements und dem Außenformteil ein Spalt gebildet ist. Dokument US 8 491 047 B1 offenbart den Oberbegriff des Anspruchs 1.

Aus der DE 10 2013 114 108 A1 ist eine B-Säule mit einem ähnlichen Aufbau bekannt. Ein im Querschnitt hutförmiges Verstärkungsteil ist zwischen dem inneren und äußeren Säulenteil vorgesehen, dessen Flanschabschnitte mittels eines Strukturschaums mit dem inneren Säulenteil verbunden sind und dessen Bodenabschnitt mittels eines Strukturschaums mit dem äußeren Säulenteil verbunden ist.

Aus der DE 197 35 640 A1 ist eine zur Befestigung eines Sicherheitsgurtes dienende Kraftfahrzeug-B- oder C-Säule mit einem Außenblech, einem Innenblech und einem zwischen dem Innenblech und dem Außenblech angeordneten Verstärkungsblech bekannt. Das Verstärkungsblech hat zwei abgebogene Schenkel, die gegen das Innenblech anliegen und mit diesem verschweißt sind.

Aus der EP 2 985 209 A2 ist ein Strukturbauteil in Form einer B-Säule für eine Kraftfahrzeugkarosserie bekannt. Die B-Säule umfasst ein kaltumgeformtes Innenformteil und ein warmumgeformtes und gehärtetes Außenformteil, das eine variable Dicke über der Länge aufweist sowie eine Verbindungskante zum Verbinden mit dem ersten Formteil. Das Innenformteil und das Außenformteil sind mittels einer Hochenergiestrahlschweißnaht entlang der Verbindungskante miteinander verbunden, wobei die Verbindungskante des Außenformteil von einer Außenkante des Innenformteils beabstandet ist, so dass das Innenformteil hier einen einlagigen Flanschabschnitt der B-Säule zum Befestigen an ein Karosseriebauteil bildet.

Aus der DE 10 2013 011 679 B4 ist eine B-Säule mit einem Innenblech mit zwei seitlichen Flanschen, einem hutprofilförmigen Außenblech mit zwei seitlichen Flanschen und einem dazwischen angeordneten hutprofilförmigen Verstärkungsblech mit zwei seitlichen Flanschen bekannt. Die Flansche des Innenblechs, des Verstärkungsblechs und des Außenblechs sind zusammengeführt und miteinander verschweißt, wobei ein insgesamt dreilagiger Flansch der B-Säule gebildet wird.

Verstärkungsbauteile, insbesondere B-Säulen-Verstärkungen, sind in der Regel als Hutprofile ausgebildet. Dabei bilden die Fügeflansche der Verstärkungsbauteile beziehungsweise der B-Säule gleichzeitig den Türflansch, auf den bei der späteren Fahrzeugmontage der Kantenschutz beziehungsweise die Türdichtung montiert wird. Das bedeutet, dass der Türflansch in Bezug auf die Bautiefe der B-Säule eher an der Fahrzeuginnenseite liegt. Bei Fahrzeugen mit rahmenlosen Türen verlagert sich der Fügeflansch der B-Säule ab etwa der Höhe des oberen Türscharniers in Richtung Fahrzeugaußenseite, um dort eine Dichtebene mit der Türscheibe zu bilden.

Die Geometrie eines Verstärkungsbauteils einer B-Säule beeinflusst wesentlich die Belastung, welche die B-Säule aufnehmen kann. Dabei gilt generell, dass eine B-Säule mit größerer Bautiefe eine größere Biegesteifigkeit aufweist, als eine B-Säule mit geringerer Bautiefe.

Der vorliegenden Erfindung liegt die Aufgabe zugrunde, eine Verstärkungsanordnung für eine Kraftfahrzeugkarosserie, insbesondere B-Säulen-Verstärkung, vorzuschlagen, die bei möglichst geringer Bautiefe eine hohe Biegesteifigkeit aufweist.

Eine Lösung besteht in einem Strukturbauteil für eine Kraftfahrzeugkarosserie, insbesondere in Form einer B-Säule, umfassend: ein Außenblech mit einer Außenwand, zwei einander gegenüberliegenden Seitenwänden und zwei hiervon seitlich abstehenden äußeren Flanschabschnitten; ein Innenblech mit einer Innenwand, zwei einander gegenüberliegenden Seitenwänden und zwei hiervon seitlich abstehenden inneren Flanschabschnitten; ein Verstärkungsprofil mit einem Profilboden, zwei einander gegenüberliegenden Profilwänden und zwei hiermit verbundenen Verbindungsabschnitten; wobei vorgesehen ist, dass, zumindest in einem oberen Bereich des Strukturbauteils, eine maximale Profilhöhe des Verstärkungsprofils größer ist als eine maximale Profilhöhe des Außenblechs, die Verbindungsabschnitte des Verstärkungsprofils gegen die Innenwand des Innenblechs abgestützt sind, und die äußeren Flanschabschnitte des Außenblechs und die inneren Flanschabschnitte des Innenblechs unmittelbar aneinander anliegen und miteinander fixiert sind. Es kann insbesondere vorgesehen sein, dass die Verbindungsabschnitte des Verstärkungsprofils, zumindest in einem unteren Bereich des Strukturbauteils, zwischen den äußeren Flanschabschnitten des Außenblechs und den inneren Flanschabschnitten des Innenblechs fixiert sind.

Ein Vorteil ist, dass die effektive Profilhöhe des Verstärkungsprofils, welche die Biegesteifigkeit des Strukturbauteils wesentlich mit beeinflusst, zumindest in dem genannten oberen Bereich des Strukturbauteils erhöht ist. Auf diese Weise kann beispielsweise, bei gleichbleibender Profilhöhe des Strukturbauteils und/oder gleichbleibender Blechdicke des Verstärkungsprofils, eine höhere Biegesteifigkeit des Verstärkungsprofils und damit des Strukturbauteils erreicht werden, beziehungsweise es kann, bei gleicher Biegesteifigkeit des Strukturbauteils, die Profilhöhe des Strukturbauteils und/oder die Blechdicke des Verstärkungsprofils reduziert werden. Durch die erfindungsgemäße Ausgestaltung kann aufgrund der höheren erzielbaren Biegesteifigkeit des Strukturbauteils unter Umständen auf zusätzliche Verstärkungsbauteile verzichtet werden, was wiederum den Fertigungs- und Montageaufwand für das Strukturbauteil vermindert. Außerdem ergibt sich durch die erreichbare geringere Profilhöhe des Strukturbauteils beziehungsweise durch die erreichbare geringere Blechdicke des Verstärkungsprofils ein Gewichteinsparpotential.

Das Strukturbauteil kann insbesondere in Form einer Fahrzeugsäule eines Kraftfahrzeuges gestaltet sein, insbesondere eine A-, B- oder C-Säule. Das Innenblech, auch Schließblech, Säule Innen, Innenpaneel oder Innenformteil genannt, bildet somit Teil einer Fahrzeugaufbauinnenseite. Das Außenblech, das auch als Außenformteil, Säule Außen oder Außenpaneel bezeichnet wird, bildet entsprechend einen Teil einer Fahrzeugaufbauaußenseite. Die Fahrzeugsäulen werden üblicherweise mit einer Außenhaut, welche das außen sichtbare Karosserieblech darstellt, verbunden.

Eine B-Säule, auch Mittelsäule genannt, kann funktional in mehrere Teilbereiche unterteilt werden, insbesondere einen Kopfbereich zum Anbinden der B-Säule an einen Dachholm, einen oberen Säulenbereich, der sich vom Kopfbereich nach unten erstreckt, einen unteren Säulenbereich, der sich weiter nach unten erstreckt, sowie einen daran anschließenden Fußbereich, der zum Anbinden der B-Säule an einen Schweller ausgestaltet ist.

Vorliegend ist insbesondere vorgesehen, dass die konstruktive Ausgestaltung, gemäß der die maximale Profilhöhe des Verstärkungsprofils größer ist als die maximale Profilhöhe des Außenblechs sich über mindestens das 0,3-fache der Gesamthöhe der B-Säule erstreckt, insbesondere mindestens das 0,4-fache der Gesamthöhe, insbesondere mindestens das 0,5-fache der Gesamthöhe. Es ist auch möglich, dass diese Ausgestaltung über eine noch größere Erstreckung realisiert wird, insbesondere auch über die gesamte Länge des Verstärkungsprofils. Folglich ergeben sich die oben genannten Vorteile einer erhöhten Biegesteifigkeit beziehungsweise eines verminderten Gewichts entsprechend auch in diesem Säulenbereich über die jeweilige Erstreckung.

Es kann zumindest in einem Teilabschnitt des oberen Säulenbereichs, insbesondere auch im gesamten oberen Säulenbereich vorgesehen sein, dass die maximale Profilhöhe des Verstärkungsprofils größer ist als das 0,9-fache des kleinsten Abstands zwischen der Außenwand und der Innenwand. Diese konstruktive Ausgestaltung mit möglichst großer Profilhöhe des Verstärkungsprofils kann sich bis in den mittleren beziehungsweise unteren Säulenabschnitt fortsetzen, mit dem damit verbundenen Vorteil einer erhöhten Biegesteifigkeit über die jeweilige Erstreckung.

Zumindest in einem Teilabschnitt des oberen Säulenbereichs sind die Verbindungsabschnitte des Verstärkungsprofils gegen die Innenwand des Innenformteils abgestützt. Es versteht sich, dass diese konstruktive Ausgestaltung mit an der Innenwand abgestütztem Verstärkungsprofil auch in weiterer Erstreckung nach unten bis in den mittleren beziehungsweise unteren Säulenabschnitt realisiert werden kann. Folglich ergeben sich die oben genannten Vorteile einer erhöhten Biegesteifigkeit beziehungsweise eines verminderten Gewichts entsprechend auch in diesem Säulenbereich über die jeweilige Erstreckung.

Vorzugsweise liegen die Verbindungsabschnitte des Verstärkungsprofils flächig an der Innenwandung des Innenblechs an. Auf diese Weise ergibt sich eine gute Krafteinleitung beziehungsweise Abstützung vom Verstärkungsprofil gegen das Innenblech. Die Verbindungsabschnitte sind flanschartig von den Seitenwänden abgebogen und gegen die Innenwand abgestützt beziehungsweise mit dieser verbunden. Insofern können die Verbindungsabschnitte auch als Flansch- oder Stützabschnitte bezeichnet werden.

Die Verbindungsabschnitte sind zumindest im Kopfbereich der B-Säule an der Innenwandung des Innenblechs fixiert. Die Verbindung kann stoffschlüssig, insbesondere mittels Schweißen oder Kleben, und/oder formschlüssig, insbesondere mittels Nietverbindungen, realisiert werden. Im weiteren Verlauf nach unten, also im an den Kopfbereich anschließenden oberen Säulenbereich, können die Verbindungsabschnitte ebenfalls an der Innenwandung des Innenformteils fixiert sein. Alternativ ist es auch möglich, dass die Verbindungsabschnitte zumindest in einem Teilabschnitt des oberen Säulenbereichs fixierungslos an der Innenwandung des Innenformteils abgestützt sind. Das heißt hier wären das Verstärkungsprofil nur gegen die Innenwand abgestützt, nicht aber über gesonderte Fixiermittel, wie eine Schweißung, fixiert. Die feste Verbindung des Verstärkungsprofils mit dem Innenblech würde in diesem Fall über die obere Fixierung im Kopfbereich und die untere Fixierung im unteren Säulenabschnitt realisiert.

Zumindest in einem Teilabschnitt des oberen Säulenbereichs, insbesondere im gesamten oberen Säulenbereich, sind die Flanschabschnitte des Außenblechs und die Flanschabschnitte des Innenblechs unmittelbar miteinander fixiert, insbesondere stoffschlüssig mittels Schweißen. So hat die B-Säule in diesem Teilabschnitt zu beiden Seiten einen zweilagigen Flansch, der insbesondere als Türflansch dient. Ein zweilagiger Flansch hat den Vorteil einer besseren Verschweißbarkeit mit einer Außenhaut des Kraftfahrzeugs, als ein vergleichsweise dickerer dreilagiger Flansch.

Die Innenwand des Innenblechs kann im Querschnitt betrachtet zwei seitliche Mulden aufweisen, die benachbart zu den inneren Seitenwandabschnitten angeordnet sind und parallel zu diesen verlaufen. Die Mulden können beispielsweise in einem mittleren Bereich der B-Säule vorgesehen sein, wobei es sich versteht, dass sich die Mulden auch in den oberen und/oder unteren Säulenbereich erstrecken können. Es ist insbesondere vorgesehen, dass im Querschnitt betrachtet zumindest einer der Verbindungsabschnitte des Verstärkungsprofils in einer der seitlichen Mulden abgestützt ist. Die Erstreckung des Verstärkungsprofils bis in die Mulde trägt ebenfalls zu einem großen Profilhöhe und damit einer erhöhten Biegesteifigkeit bei.

Nach einer möglichen Ausführungsform ist zumindest in einem unteren Säulenbereich vorgesehen, dass die Verbindungsabschnitte des Verstärkungsprofils zwischen den äußeren Flanschabschnitten des Außenblechs und den inneren Flanschabschnitten des Innenblechs fixiert sind. Auf diese Weise wird im unteren Säulenbereich beidseitig der B-Säule ein dreilagiger Flansch gebildet, der insbesondere als Türflansch dient. Das Fixieren der drei Flanschlagen, also Flanschabschnitt des Außenblechs, Verbindungsabschnitt des Verstärkungsprofils und Flanschabschnitt des Innenblechs, erfolgt insbesondere mittels Schweißen, beispielsweise Widerstandspunktschweißen oder Hochenergiestrahlschweißen. Die konstruktive Ausgestaltung, dass die Verbindungsabschnitte des Verstärkungsprofils zwischen den Flanschabschnitten des Außen- und Innenblechs fixiert sind, kann über eine Erstreckung von weniger als dem 0,5-fachen der Gesamthöhe der B-Säule gewählt sein. Im Rahmen der vorliegenden Offenbarung kann der untere Säulenbereich insbesondere als ein Bereich betrachtet werden, der im Wesentlichen eine Überlappung mit der Kraftfahrzeugtüre aufweist. Der obere Säulenbereich kann insbesondere einen Bereich mit umfassen, der im Wesentlichen im Bereich eines Seitenfensters liegt. Ein mittlerer Säulenbereich, der zwischen dem oberen und unteren Säulenbereich liegen kann, kann insbesondere im Wesentlichen auf Höhe der Schulterlinie des Fahrzeugs liegen.

Nach einer bevorzugten Ausgestaltung ist das Verstärkungsprofil so gestaltet, dass zumindest eine der Profilwände, in zumindest einem Querschnitt durch das Strukturbauteil, mit einer zum Boden senkrechten Ebene einen Winkel einschließt, der kleiner ist als 5°, insbesondere kleiner ist als 3°, insbesondere kleiner ist als 2°. Durch diese Ausgestaltung wird erreicht, dass die Profilwände in Bezug auf die Innenwand, von der sie sich in Richtung Außenwand erstrecken, verhältnismäßig steil verlaufen. Folglich hat der Profilboden eine möglichst große Breite, so dass dieser hohe Druckkräfte aufnehmen kann.

Vorzugsweise haben die Verbindungsabschnitte des Verstärkungsprofils eine Breite von weniger als 20 mm, insbesondere weniger als 16 mm. Die Kanten beziehungsweise seitlichen Enden der Verbindungsabschnitte sind möglichst nah an den Seitenwänden des Innenblechs angeordnet. Zusammen mit der möglichst geringen Breite der Verbindungsabschnitte trägt diese Ausgestaltung ebenfalls zu einem möglichst breiten Verstärkungsprofil bei.

Zumindest in einem Teilabschnitt des oberen Säulenbereichs, insbesondere zumindest im ganzen oberen Säulenbereich, kann eine mittlere Breite zwischen den Seitenwänden des Verstärkungsprofils größer als das 0,3-fache und/oder kleiner ist als das 0,7-fache einer mittleren Breite zwischen den Seitenwänden des Innenblechs betragen. Hiermit soll der Bodenabschnitt des Verstärkungsprofils eine möglichst große Breite und damit eine große Widerstandkraft gegen Eindrücken haben.

Nach einer möglichen Ausgestaltung können das Innenblech und/oder das Außenblech ein kaltumgeformtes Bauteil aus einem metallischen Material, vorzugsweise aus Stahlblech hergestellt sein. Unter Kaltumformung wird das Umformen von Metallen bei einer Temperatur deutlich unterhalb deren Rekristallisationstemperatur verstanden. Als Stahlwerkstoff kann beispielsweise ein kaltgewalztes, mikrolegiertes Stahlblech, beispielsweise verwendet werden. Das Stahlblech kann mit einer Korrosionsschutzbeschichtung, insbesondere einer Zinkbeschichtung, versehen werden.

Das Verstärkungsprofil ist vorzugsweise ein warmumgeformtes und gehärtetes Bauteil aus einem metallischen Material. Unter Warmumformung wird im Rahmen der vorliegenden Offenbarung insbesondere das Umformen von Metallen oberhalb deren Rekristallisationstemperatur verstanden. Als Stahlwerkstoff für das Verstärkungsprofil kann jeder härtbare Stahl, insbesondere ein Borstahl wie beispielsweise 22MnB5, verwendet werden. Das Verstärkungsprofil kann beschichtet sein, insbesondere mit einer Aluminium-Silizium-Legierung oder Zink, um eine Verzunderung des Bauteils während der Warmumformung zu vermeiden beziehungsweise als Korrosionsschutz zu dienen. Das Verstärkungsprofil wird entweder nach der Warmumformung oder zusammen mit der Warmumformung zumindest in Teilbereichen, vorzugsweise vollständig, gehärtet. Das Warmumformen und Härten kann in einem Prozess in einem Presshärte-Werkzeug durchgeführt werden. Dieser kombinierte Umform- und Härteprozess wird auch als Presshärten bezeichnet.

Nach einer möglichen Ausführungsform kann zumindest eines der Bauteile Verstärkungsprofil, Innenblech und/oder Außenblech, eine variable Dicke über der Länge aufweisen. Ein Bauteil mit variabler Dicke über der Länge lässt sich beispielsweise durch Flexibles Walzen von Bandmaterial und anschließendes Herausarbeiten von Blechplatinen (Tailor Rolled Blanks) oder durch Verbinden mehrerer Teilplatinen unterschiedlicher Blechdicke (Tailor Welded Blanks) herstellen. Durch diese Ausgestaltung kann die Dicke an die jeweiligen Belastungsverhältnisse der unterschiedlichen Bauteilbereiche angepasst werden, so dass insgesamt ein gewichtsoptimiertes Bauteil erreicht wird.

Nach einer möglichen Ausführungsform können die Flanschabschnitte des Außenblechs und Innenblechs im oberen Bereich der B-Säule in Bezug auf eine sich zwischen der Innenwand und der Außenwand erstreckende Mittelebene in Richtung zur Außenwandung des Außenblechs versetzt sein. Diese Ausgestaltung mit in Richtung Fahrzeugäußerem versetzten Flansch eignet sich insbesondere für Kraftfahrzeuge mit rahmenlosen Türen. Hier bilden die nach außen versetzten Flansche eine Dichtebene mit der Türscheibe des Kraftfahrzeugs. Alternativ oder in Ergänzung können die Flanschabschnitte des Innenblechs und des Außenblechs im unteren Säulenbereich in Bezug auf die Mittelebene in Richtung zur Innenwandung des Innenblechs versetzt sein. Hier bilden die nach innen versetzten Flansche eine Dichtebene mit der Türe.

Bevorzugte Ausführungsbeispiele werden nachstehend anhand der Zeichnungsfiguren erläutert. Hierin zeigt:
- Figur 1:: ein erfindungsgemäßes Strukturbauteil in Form einer B-Säule in dreidimensionaler Darstellung von schräg vorne;
- Figur 2:: eine Seitenansicht auf die B-Säule aus Figur 1 von hinten;
- Figur 3A:: einen Querschnitt der B-Säule nach Figur 1 entlang der Schnittlinie A-A aus Figur 2;
- Figur 3B:: einen Querschnitt der B-Säule nach Figur 1 entlang der Schnittlinie B-B aus Figur 2; und
- Figur 3C:: einen Querschnitt der B-Säule nach Figur 1 entlang der Schnittlinie C-C aus Figur 2.

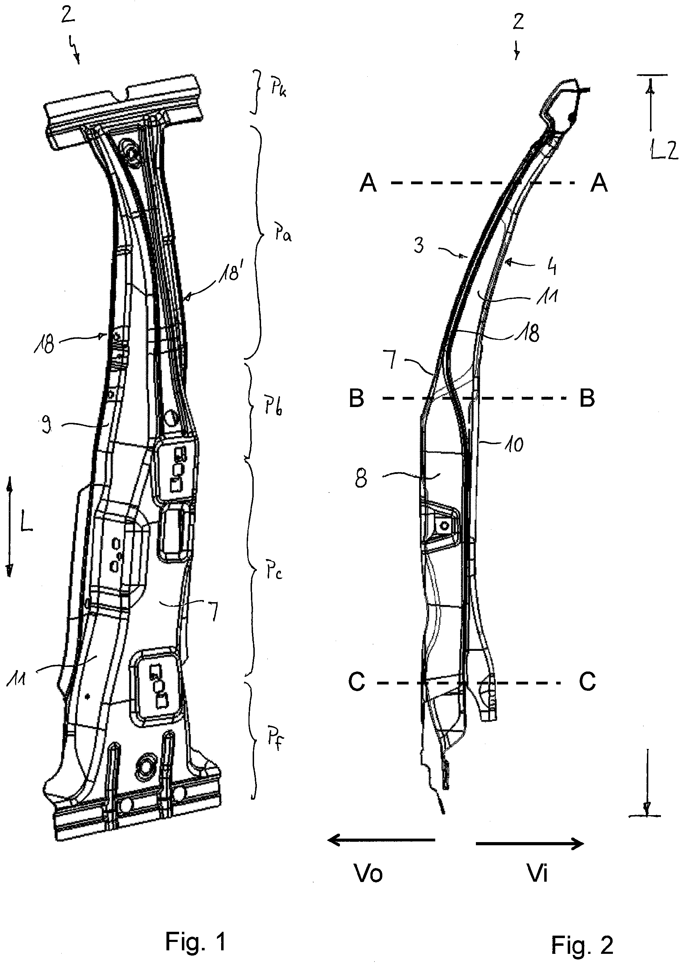

Die Figuren 1 bis 3, welche nachstehend gemeinsam beschrieben werden, zeigen ein erfindungsgemäßes Strukturbauteil 2. Das vorliegende Strukturbauteil ist in Form einer B-Säule 2 gestaltet, wobei es sich versteht, dass das Strukturbauteil auch andere Ausgestaltungen haben kann. Als Strukturbauteile werden im Zusammenhang mit der vorliegenden Offenbarung insbesondere strukturgebende Formbauteile für Kraftfahrzeugkarosseriekomponenten verstanden, zum Beispiel A-, B- oder C-Säulen, Türaufprallträger, Streben oder Stoßfänger.

Eine B-Säule ist eine tragende Säule in der Mitte der Fahrgastzelle, die den Dachbereich des Kraftfahrzeugs mit dem Karosserieunterbau verbindet. Im Falle eines Unfalls kommt den Fahrzeugsäulen die Aufgabe zu, die Fahrgastzelle gegen Verformung zu stabilisieren. Eine besonders wichtige Aufgabe von Fahrzeugsäulen ist die Aufnahme von Kräften beim Seitenaufprall, damit die Fahrzeuginsassen unversehrt bleiben.

Das vorliegende Strukturbauteil 2 in Form einer B-Säule umfasst ein Außenblech 3, das in montiertem Zustand zur Fahrzeugaußenseite Vo weist, ein Innenblech 4, das in montiertem Zustand zur Fahrzeuginnenseite Vi weist, sowie zumindest ein Verstärkungsprofil 5, das in einem zwischen dem Außenblech 3 und dem Innenblech 4 gebildeten Hohlraum 6 angeordnet ist und zur Verstärkung des Strukturbauteils dient. Die B-Säule umfasst ferner einen Kopfbereich Pk zum Anbinden der B-Säule an einen Dachholm, einen oberen Säulenbereich Pa, der sich vom Kopfbereich Pk nach unten erstreckt, einen mittleren Säulenbereich Pb, einen daran anschließenden unteren Säulenbereich Pc, der sich weiter nach unten erstreckt, sowie einen daran anschließenden Fußbereich Pf, der zum Anbinden der B-Säule an einen Schweller ausgestaltet ist.

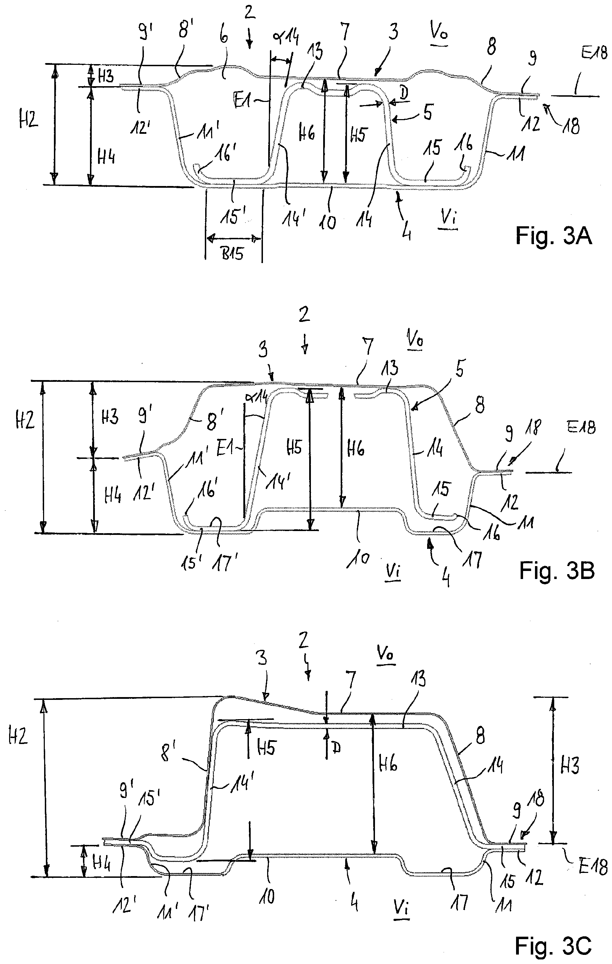

Das Außenblech 3, das auch als Außenformteil bezeichnet werden kann, umfasst eine Außenwand 7, zwei einander gegenüberliegende Seitenwände 8, 8' und zwei hiervon seitlich abstehende Flanschabschnitte 9, 9'. Somit weist das Außenblech 3 einen im Wesentlichen hutprofilförmigen Querschnitt auf. Die Form des Außenblechs 3 verändert sich über der Längserstreckung (L). So ist das Außenblech 3 in einem oberen Bereich abgeflacht und hat hier eine geringe Profilhöhe H3, wie insbesondere in Figur 3A erkennbar. Die Außenwand 7 ist nur geringfügig von den Flanschabschnitten 9, 9' nach außen versetzt, und die Seitenwände 8, 8' haben entsprechend nur eine geringe Steigung und sind verhältnismäßig kurz. Nach unten hin, das heißt in Richtung Säulenfuß, nimmt die Profilhöhe H3 des Außenblechs 3 zu, wie in den Figuren 3B und 3C erkennbar. In einem mittleren Säulenbereich Pm, wie in Figur 3B erkennbar, sind die Flanschabschnitte 9, 9' deutlich von der Außenwand 7 versetzt und liegen in Bezug auf die Gesamtprofilhöhe H2 der B-Säule 2 etwa mittig. Die Seitenwände 8, 8' haben in diesem mittleren Bereich Pb eine größere Steigung als im oberen Säulenbereich Pa. Im unteren Säulenbereich Pc hat die Profilhöhe H3 des Außenblechs 3 nochmals zugenommen. Die Flanschabschnitte 9, 9' haben einen größten Abstand von der Außenwand 7 und liegen in Bezug auf die Gesamtprofilhöhe H2 der B-Säule etwa in einer Ebene mit dem Innenblech 4, welches in diesem unteren Säulenbereich Pc abgeflacht ist.

Das Innenblech 4, das auch als Innenformteil bezeichnet werden kann, umfasst eine Innenwand 10, zwei einander gegenüberliegende Seitenwände 11, 11' und zwei hiervon seitlich abstehende Flanschabschnitte 12, 12'. Somit weist das Innenblech 4 ebenfalls einen im Wesentlichen hutprofilförmigen Querschnitt auf. Der Querschnitt des Innenblechs 4 verändert sich insofern gegengleich zum Außenblech 3, als mit zunehmender Profilhöhe H3 des Außenblechs 3 entsprechend die Profilhöhe H4 des Innenblechs 4 entsprechend abnimmt, und umgekehrt.

Das Verstärkungsprofil 5 umfasst einen Profilboden 13, zwei einander gegenüberliegende Profilewände 14, 14' und zwei hiervon seitlich abstehende Profilflansche 15, 15'. Somit weist das Verstärkungsprofil 5 ebenfalls einen im Wesentlichen hutprofilförmigen Querschnitt auf. Das Verstärkungsprofil 5 dient zum Verstärken der B-Säule 2, weswegen es eine größere Wanddicke aufweist als das Außenblech 3 und das Innenblech 4. Das Verstärkungsprofil 5 hat eine maximale Profilhöhe H5, die zumindest im oberen Säulenbereich Pa größer ist als die maximale Profilhöhe H3 des Außenblechs 3 in diesem Säulenbereich Pa. Dabei ist insbesondere vorgesehen, dass die maximale Profilhöhe H5 des Verstärkungsprofils 5 größer als das 0,9-fache des kleinsten Abstands H6 zwischen der Außenwand 7 und der Innenwand 10 sein. Zwischen dem Profilboden 13 und der Außenwand 7 ist über die gesamte Erstreckung der B-Säule ein Spalt ausgebildet. Durch die verhältnismäßig große Profilhöhe H5 ergibt sich eine besonders hohe Biegesteifigkeit der B-Säule 2, welche nämlich von der effektiven Profilhöhe H5 des Verstärkungsprofils 5 abhängt.

Vorzugsweise ist die Profilhöhe H5 des Verstärkungsprofils 5 mindestens über eine Länge von 30 % der Gesamtlänge L2 der B-Säule 2 größer ist als die Profilhöhe H3 des Außenblechs 3. Für eine besonders hohe Biegesteifigkeit auch in den anderen Säulenbereichen kann die Profilhöhe H5 des Verstärkungsprofils 5 auch in weiteren Bereichen der B-Säule größer sein als die maximale Profilhöhe H3 des Außenblechs 3. Vorliegend ist die Profilhöhe H5 zumindest noch im Kopfbereich Pk und/oder im mittleren Säulenbereich Pb und/oder in Teilen des unteren Säulenbereichs Pc größer als die maximale Profilhöhe H3 des Außenblechs 3 in dem jeweiligen Säulenbereich.

Das Verstärkungsprofil 5 ist zumindest im oberen Säulenbereich Pa mit seinen Profilflanschen 15, 15' gegen die Innenwand 10 des Innenformteils 4 abgestützt, wie insbesondere in den Figuren 3A und 3B erkennbar. In diesen Bereichen der B-Säule 2, in denen die Profilflansche 15, 15' des Verstärkungsprofils 5 vollständig im Hohlraum 6 angeordnet sind, sind die Flanschabschnitte 9, 9' des Außenblechs und die Flanschabschnitte 12, 12' unmittelbar miteinander in Anlage beziehungsweise miteinander verbunden, und bilden entsprechend beidseitig der B-Säule 2 jeweils einen 2-lagigen Flansch 18, 18' der B-Säule 2.

Die Profilflansche 15, 15' dienen insbesondere zum Verbinden beziehungsweise Abstützen des Verstärkungsprofils 5 am Innenblech 4 beziehungsweise - im unteren Säulenbereich Pc - auch mit dem Außenblech 3. Sie können insofern auch als Verbindungs- oder Stützabschnitte 15, 15' bezeichnet werden. Die Profilflansche 15, 15' sind im Kopfbereich Pk der B-Säule 2 an der Innenwandung 10 des Innenblechs 4 fixiert, beispielsweise mittels Schweißen, insbesondere Widerstandspunkt- oder Laserschweißen, oder mittels Kleben. Die B-Säule 2 umfasst folglich 4 Verbindungslinien entlang der Haupterstreckung der Säule, nämlich zwei Verbindunglinien entlang der Flansche 18, 18' und zwei weitere Verbindungslinien zwischen den Profilflanschen 15, 15' und dem Innenboden 10. Die Profilflansche 15, 15' haben vorzugsweise eine Breite von weniger als 20 mm, insbesondere weniger als 16 mm. Die Kanten 16, 16' beziehungsweise seitlichen Enden der Profilflansche 15, 15' sind benachbart zu den Seitenwänden 11, 11' des Innenblechs 4 angeordnet und verlaufen parallel zu diesen. In den Säulenbereichen, in denen die Profilflansche 15, 15' an der Innenwand 10 abgestützt sind, beziehungsweise innerhalb des Hohlraums 6 liegen, sind die seitlichen Enden 16, 16' nach oben abgebogen und folgen somit der Krümmung der Wandung 11, 11' des Innenblechs 4.

Die Seitenwände 14, 14' des Verstärkungsprofils 5 sind in Bezug auf die Flanschabschnitte 15, 15' beziehungsweise die Innenwand 10 verhältnismäßig steil aufgestellt. Insbesondere ist vorgesehen, dass in zumindest einem Säulenbereich Pk, Pa, Pb, Pc, Pf zumindest eine der Profilwände 14, 14' mit einer zum Innenboden 10 senkrechten Ebene E1 einen Winkel α14 einschließt, der kleiner als 10° ist, insbesondere kleiner 5°, gegebenenfalls kleiner 2°. Diese Maßnahme trägt zu einer möglichst großen Breite des Verstärkungsprofils 5 bei, das entsprechend hohe Druckkräfte aufnehmen kann.

Im Verlauf vom oberen Säulenbereich Pa zum unteren Säulenbereich Pc verändert sich der Querschnitt des Verstärkungsprofils 5 und dessen Anbindung an das Innenblech 4. Während die Profilflansche 15, 15' des Verstärkungsprofils 5 im oberen Säulenbereich Pa auf der Innenwand 10 abgestützt sind und vollständig im Hohlraum 6 aufgenommen sind, erstrecken sich die Profilflansche 15, 15' im unteren Säulenbereich Pc aus dem zwischen Innenblech 4 und Außenblech 3 gebildeten Hohlraum hinaus und sind hier zwischen den Flanschabschnitten 9, 9' des Außenblechs 3 und den Flanschabschnitte 12, 12' des Innenblechs 4 angeordnet. Entsprechend hat die B-Säule in diesem unteren Säulenbereich Pc einen dreilagigen Flansch 18, 18', der insbesondere als Türflansch dient. Die drei Flanschlagen 9, 15, 12; 9', 15', 12' werden insbesondere mittels Schweißen, beispielsweise Widerstandspunktschweißen oder Hochenergiestrahlschweißen, miteinander verbunden. Der dreilagige Flansch 18, 18' dient in montiertem Zustand der Fahrzeugkarosserie als Türflansch, auf den eine Türdichtung aufgesteckt werden kann.

Zwischen dem oberen Säulenbereich Pa und dem unteren Säulenbereich Pc durchläuft das Verstärkungsprofil 5 eine Formänderung derart, dass die Breite des Verstärkungsprofil 5 zunimmt und die Profilflansche 15, 15' vom Innenboden 10 in Richtung der Flanschabschnitte 9, 9'; 12, 12' wandern. Dieser Übergang vollzieht sich etwa im mittleren Säulenbereich Pb. In Figur 3b ist beispielsweise erkennbar, dass der rechte Profilflansch 15 bereits vom Innenboden 10 abgehoben ist.

Bei der vorliegenden Ausführungsform der B-Säule 2, die insbesondere für ein Kraftfahrzeug mit rahmenlosen Türen geeignet ist, geht die Änderung des Verstärkungsprofils 5 über der Länge einher mit einer Verlagerung der Flanschebene E18 der Flansche 18, 18' der B-Säule 2. Wie insbesondere in Figur 2 erkennbar, liegen die Flansche 18, 18' im oberen Säulenbereich Pa nach außen versetzt und bilden hier eine Dichtungsebene für ein Türfenster. Im unteren Säulenbereich Pc sind die Flansche 18, 18' nach innen versetzt und bildet hier einen Türflansch. Im mittleren Säulenbereich Pb, der auch als Übergangsbereich bezeichnet werden kann, wandert die Flanschebene von außen nach innen.

Der Innenboden 10 hat über zumindest eine Teilerstreckung der B-Säule 2 zwei seitliche Mulden 17, 17', die entlang der Seitenwände 11, 11' verlaufen, beziehungsweise mit einem Radius in diese übergehen. Vorliegend erstrecken sich die Mulden 17, 17', die auch als Kanäle bezeichnet werden können, etwa vom mittleren Säulenabschnitt Pb (Figur 3B) nach unten zum unteren Säulenabschnitt Pc (Figur 3C). In diesen Säulenbereichen mit Mulden 17, 17' sind die Profilflansche 15, 15' in den Mulden beziehungsweise im Bereich der Mulden angeordnet. Zumindest eine der beiden Mulden 17, 17' kann durchgehend vom Kopfbereich Pk bis zum Fußbereich Pf ausgeführt sein, und insbesondere als Dehnfuge dienen. Die Mulde kann dabei optional so ausgebildet werden, dass dieser Bereich nicht gehärtet ist.

Das Außenblech 3 und das Innenblech 4 sind vorzugsweise aus Stahlblech im Wege des Kaltumformens hergestellt. Das Stahlblech kann mit einer Korrosionsschutzbeschichtung, insbesondere einer Zinkbeschichtung, versehen werden. Das Verstärkungsprofil 5 ist vorzugsweise ein warmumgeformtes und gehärtetes Bauteil aus einem härtbaren Stahlwerkstoff, wie beispielsweise 22MnB5. Das Verstärkungsprofil 5 kann beschichtet sein, insbesondere mit einer Aluminium-Silizium-Legierung oder Zink, um eine Verzunderung des Bauteils während der Warmumformung zu vermeiden beziehungsweise als Korrosionsschutz zu dienen.

Das Verstärkungsprofil 5 kann eine variable Dicke D über der Länge L aufweisen. Hiermit lässt sich die Dicke D an die jeweiligen technischen Anforderungen hinsichtlich der Belastbarkeit in den unterschiedlichen Bauteilbereichen Pk, Pa, Pb, Pc, Pf anpassen, was zu einer Gewichtsreduktion der B-Säule 2 beiträgt. Dasselbe gilt auch für das Innenblech 4, welches ebenfalls eine variable Dicke über der Länge haben kann.

### Bezugszeichenliste

- 1 2: Strukturbauteil
- 3: Außenblech
- 4: Innenblech
- 5: Verstärkungsprofil
- 6: Hohlraum
- 7: Außenwand
- 8, 8': Seitenwand
- 9, 9': Flanschabschnitt
- 10: Innenwand
- 11, 11': Seitenwand
- 12, 12': Flanschabschnitt
- 13, 13': Profilboden
- 14, 14': Profilewand
- 15, 15': Profilflansch
- 16, 16': Kante
- 17, 17': Mulde
- 18, 18': Flansch

- B: Breite
- H: Profilhöhe
- L: Länge
- Pk: Kopfbereich
- Pa: oberer Säulenbereich
- Pb: mittlerer Säulenbereich
- Pc: unterer Säulenbereich
- Pf: Fußbereich
- Vi: Innenseite
- Vo: Außenseite

## Patentansprüche

1. Strukturbauteil für eine Kraftfahrzeugkarosserie, insbesondere B-Säule, umfassend:
ein Außenblech (3) mit einer Außenwand (7), zwei einander gegenüberliegenden Seitenwänden (8, 8') und zwei hiervon seitlich abstehenden äußeren Flanschabschnitten (9, 9');
ein Innenblech (4) mit einer Innenwand (10), zwei einander gegenüberliegenden Seitenwänden (11, 11') und zwei hiervon seitlich abstehenden inneren Flanschabschnitten (12, 12');
ein Verstärkungsprofil (5) mit einem Profilboden (13), zwei einander gegenüberliegenden Profilwänden (14, 14') und zwei hiermit verbundenen Verbindungsabschnitten (15, 15');
wobei, zumindest in einem oberen Bereich (Pa) des Strukturbauteils (2), eine maximale Profilhöhe (H5) des Verstärkungsprofils (5) größer ist als eine maximale Profilhöhe (H3) des Außenblechs (3), und die Verbindungsabschnitte (15, 15') des Verstärkungsprofils (5) gegen die Innenwand (10) des Innenblechs (4) abgestützt sind, und die äußeren Flanschabschnitte (9, 9') und die inneren Flanschabschnitte (12, 12') unmittelbar aneinander anliegen und miteinander fixiert sind;
**dadurch gekennzeichnet, dass** die Verbindungsabschnitte (15, 15') des Verstärkungsprofils (5), zumindest in einem unteren Bereich (Pc) des Strukturbauteils (2), zwischen den äußeren Flanschabschnitten (9, 9') des Außenblechs (3) und den inneren Flanschabschnitten (12, 12') des Innenblechs (4) fixiert sind.

2. Strukturbauteil nach Anspruch 1,
**dadurch gekennzeichnet,**
**dass** die Verbindungsabschnitte (15, 15') in einem Kopfbereich (Pk) Strukturbauteils (2), welcher zur Anbindung an einen Dachholm des Kraftfahrzeugs ausgebildet ist, an der Innenwandung (10) des Innenblechs (4) fixiert sind, insbesondere stoffschlüssig.

3. Strukturbauteil nach Anspruch 1 oder 2,
**dadurch gekennzeichnet,**
**dass** der obere Bereich (Pa) des Strukturbauteils (2), in dem die maximale Profilhöhe (H5) des Verstärkungsprofils (5) größer ist als die maximale Profilhöhe (H3) des Außenblechs (3), mindestens das 0,3-fache der Gesamtlänge (L2) des Strukturbauteils, insbesondere mindestens das 0,4-fache der Gesamtlänge (L2) des Strukturbauteils, beträgt.

4. Strukturbauteil nach einem der Ansprüche 1 bis 3,
**dadurch gekennzeichnet,**
**dass** die maximale Profilhöhe (H5) des Verstärkungsprofils (5), zumindest in dem oberen Bereich (Pa) des Strukturbauteils (2), größer ist als das 0,9-fache des kleinsten Abstands (H6) zwischen der Außenwand (7) und der Innenwand (10).

5. Strukturbauteil nach einem der Ansprüche 1 bis 4,
**dadurch gekennzeichnet,**
**dass** die Verbindungsabschnitte (15, 15') zumindest im oberen Bereich (Pa) flächig an der Innenwandung (10) des Innenblechs (4) anliegen.

6. Strukturbauteil nach einem der Ansprüche 1 bis 5,
**dadurch gekennzeichnet,**
**dass** die Verbindungsabschnitte (15, 15') des Verstärkungsprofils (5) zumindest in einem Teilabschnitt des oberen Bereichs (Pa) des Strukturbauteils an der Innenwandung (10) des Innenblechs (4) fixiert sind, insbesondere stoffschlüssig.

7. Strukturbauteil nach einem der Ansprüche 1 bis 5,
**dadurch gekennzeichnet,**
**dass** die Verbindungsabschnitte (15, 15') des Verstärkungsprofils (5) zumindest in einem Teilabschnitt des oberen Bereichs (Pa) des Strukturbauteils (2) fixierungslos an der Innenwand (10) des Innenblechs (4) abgestützt sind.

8. Strukturbauteil nach einem der Ansprüche 1 bis 7,
**dadurch gekennzeichnet,**
**dass** die Verbindungsabschnitte (15, 15'), zumindest in dem Bereich, in dem sie gegen die Innenwand (10) abgestützt sind, eine Breite (B15) von weniger als 20 mm, insbesondere weniger als 16 mm aufweisen.

9. Strukturbauteil nach einem der Ansprüche 1 bis 8,
**dadurch gekennzeichnet,**
**dass** zumindest eine der Seitenwände (14, 14') des Verstärkungsprofils (5), in zumindest einem Querschnitt durch die B-Säule (2), mit einer zum Profilboden (13) senkrechten Ebene (E1) einen Winkel (α14) einschließt, der kleiner ist als 5°, insbesondere kleiner ist als 2°.

10. Strukturbauteil nach einem der Ansprüche 1 bis 9,
**dadurch gekennzeichnet,**
**dass**, zumindest in einem Querschnitt im oberen Bereich (Pa) des Strukturbauteils, eine mittlere Breite zwischen den Profilwänden (14, 14') des Verstärkungsprofils (5) größer ist als das 0,3-fache und/oder kleiner ist als das 0,7-fache einer mittleren Breite zwischen den Seitenwänden (11, 11') des Innenblechs (4).

11. Strukturbauteil nach einem der Ansprüche 1 bis 10,
**dadurch gekennzeichnet,**
**dass** die Innenwand (10) des Innenblechs (4), zumindest in einem mittleren Bereich (Pb) des Strukturbauteils, zwei seitliche Mulden (17, 17') aufweist, die benachbart zu den inneren Seitenwandabschnitten (11, 11') angeordnet sind und parallel zu diesen verlaufen,
wobei zumindest einer der Verbindungsabschnitte (15, 15') des Verstärkungsprofils (5) in einer der seitlichen Mulden (17, 17') abgestützt ist.

12. Strukturbauteil nach einem der Ansprüche 1 bis 11,
**dadurch gekennzeichnet,**
**dass** die Verbindungsabschnitte (15, 15') des Verstärkungsprofils (5), zumindest in einem unteren Bereich (Pc) des Strukturbauteils (2), zwischen den äußeren Flanschabschnitten (9, 9') des Außenblechs (3) und den inneren Flanschabschnitten (12, 12') des Innenblechs (4) fixiert sind, insbesondere stoffschlüssig.

13. Strukturbauteil nach einem der Ansprüche 1 bis 12,
**dadurch gekennzeichnet,**
**dass** der untere Bereich (Pc) des Strukturbauteils (2), in dem die Verbindungsabschnitte (15, 15') des Verstärkungsprofils (5) mit den äußeren Flanschabschnitten (9, 9') des Außenblechs (3) und den inneren Flanschabschnitten (12, 12') des Innenblechs (4) verbunden sind, weniger als das 0,5-fache der Gesamtlänge (L2) des Strukturbauteils (2) beträgt.

14. Strukturbauteil nach einem der Ansprüche 1 bis 13,
**dadurch gekennzeichnet,**
**dass** das Innenblech (4) und/oder das Außenblech (3) kaltumgeformt sind und, dass das Verstärkungsprofil (5) warmumgeformt und gehärtet ist.

15. Strukturbauteil nach einem der Ansprüche 1 bis 14,
**dadurch gekennzeichnet,**
**dass** zumindest eines von dem Innenblech (4) und dem Verstärkungsprofil (5) eine variable Dicke (D) über der Länge (L) aufweist.

16. Strukturbauteil nach einem der Ansprüche 1 bis 15,
**dadurch gekennzeichnet,**
**dass** die äußeren Flanschabschnitte (9, 9') und die inneren Flanschabschnitte (12, 12') im oberen Bereich (Pa) des Strukturbauteils (2) in Bezug auf eine sich zwischen der Innenwand (10) und der Außenwand (7) erstreckende Mittelebene in Richtung zur Außenwandung (7) des Außenblechs (3) versetzt sind, und,
**dass** die äußeren Flanschabschnitte (9, 9') des Außenblechs (3) und die inneren Flanschabschnitte (12, 12') des Innenblechs (4) im unteren Bereich (Pc) des Strukturbauteils (2) in Bezug auf die Mittelebene in Richtung zur Innenwandung (10) des Innenblechs (4) versetzt sind.

## Claims

1. Structural component for a motor vehicle body, in particular a B-pillar, comprising:
an outer panel (3) with an outer wall (7), two side walls (8, 8') opposing each other and two outer flange portions (9, 9') projecting laterally therefrom;
an inner panel (4) with an inner wall (10), two side walls (11, 11') opposing each other and two inner flange portions (12, 12') projecting laterally therefrom;
a reinforcing profile (5) with a profile base (13), two profile walls (14, 14') opposing each other and two connecting portions (15, 15') connected thereto;
wherein, at least in an upper section (Pa) of the structural component (2), a maximum profile height (H5) of the reinforcing profile (5) is greater than a maximum profile height (H3) of the outer panel (3), and the connecting portions (15, 15') of the reinforcing profile (5) are supported against the inner wall (10) of the inner panel (4), and the outer flange portions (9, 9') and the inner flange portions (12, 12') abut directly against one another and are fixed to one another;
**characterized in that** the connecting portions (15, 15') of the reinforcing profile (5), at least in a lower section (Pc) of the structural component (2), are fixed between the outer flange portions (9, 9') of the outer panel (3) and the inner flange portions (12, 12') of the inner panel (4).

2. Structural component according to claim 1,
**characterized in**
**that** the connecting portions (15, 15') in a head section (Pk) of the structural component (2), which is configured to be connected to a roof rail of the motor vehicle, are fixed to the inner wall (10) of the inner panel (4), in particular in a material-locking manner.

3. Structural component according to claim 1 or 2,
**characterized in**
**that** the upper section (Pa) of the structural component (2), in which the maximum profile height (H5) of the reinforcing profile (5) is greater than the maximum profile height (H3) of the outer panel (3), is at least 0.3 times the total length (L2) of the structural component, in particular at least 0.4 times the total length (L2) of the structural component.

4. Structural component according to any of claims 1 to 3,
**characterized in**
**that** the maximum profile height (H5) of the reinforcing profile (5), at least in the upper section (Pa) of the structural component (2), is greater than 0.9 times the smallest distance (H6) between the outer wall (7) and the inner wall (10).

5. Structural component according to any of claims 1 to 4,
**characterized in**
**that** the connecting portions (15, 15') bear flat against the inner wall (10) of the inner panel (4) at least in the upper section (Pa).

6. Structural component according to any of claims 1 to 5,
**characterized in**
**that** at least in a partial region of the upper section (Pa) of the structural component the connecting portions (15, 15') of the reinforcing profile (5) are fixed to the inner wall (10) of the inner panel (4), in particular in a material-locking manner.

7. Structural component according to any of claims 1 to 5,
**characterized in**
**that** at least in a partial region of the upper section (Pa) of the structural component (2) the connecting portions (15, 15') of the reinforcing profile (5) are supported on the inner wall (10) of the inner panel (4) in a fixing-free manner.

8. Structural component according to any of claims 1 to 7,
**characterized in**
**that** the connecting portions (15, 15'), at least in the section in which they are supported against the inner wall (10), have a width (B15) of less than 20 mm, in particular less than 16 mm.

9. Structural component according to any of claims 1 to 8,
**characterized in**
**that** at least one of the side walls (14, 14') of the reinforcing profile (5) encloses an angle (α14) with a plane (E1) perpendicular to the profile base (13), which angle in at least one cross-section through the B-pillar (2) is smaller than 5°, in particular smaller than 2°.

10. Structural component according to any of claims 1 to 9,
**characterized in**
**that**, at least in a cross-section in the upper section (Pa) of the structural component, an average width between the profile walls (14, 14') of the reinforcing profile (5) is greater than 0.3 times and/or smaller than 0.7 times an average width between the side walls (11, 11') of the inner panel (4).

11. Structural component according to any of claims 1 to 10,
**characterized in**
**that** the inner wall (10) of the inner panel (4) has, at least in a middle section (Pb) of the structural component, two lateral recesses (17, 17') which are arranged adjacent to the inner side walls (11, 11') and extend parallel thereto, wherein at least one of the connecting portions (15, 15') of the reinforcing profile (5) is supported in one of the lateral recesses (17, 17').

12. Structural component according to any of claims 1 to 11,
**characterized in**
**that** the connecting portions (15, 15') of the reinforcing profile (5), at least in a lower section (Pc) of the structural component (2), are fixed between the outer flange portions (9, 9') of the outer panel (3) and the inner flange portions (12, 12') of the inner panel (4), in particular in a material-locking manner.

13. Structural component according to any of claims 1 to 12,
**characterized in**
**that** the lower section (Pc) of the structural component (2), in which the connecting portions (15, 15') of the reinforcing profile (5) are connected to the outer flange portions (9, 9') of the outer panel (3) and the inner flange portions (12, 12') of the inner panel (4), is less than 0.5 times the total length (L2) of the structural component (2).

14. Structural component according to any of claims 1 to 13,
**characterized in**
**that** the inner panel (4) and/or the outer panel (3) are cold-formed, and in that the reinforcing profile (5) is hot-formed and hardened.

15. Structural component according to any of claims 1 to 14,
**characterized in**
**that** at least one of the inner panel (4) and the reinforcing profile (5) has a variable thickness (D) over the length (L).

16. Structural component according to any of claims 1 to 15,
**characterized in**
**that** in the upper section (Pa) of the structural component (2) the outer flange portions (9, 9') and the inner flange portions (12, 12') are offset in direction towards the outer wall (7) of the outer panel (3) with respect to a central plane extending between the inner wall (10) and the outer wall (7), and,
**that** in the lower section (Pc) of the structural component (2) the outer flange portions (9, 9') of the outer panel (3) and the inner flange portions (12, 12') of the inner panel (4) are offset in direction towards the inner wall (10) of the inner panel (4) with respect to the central plane.

## Revendications

1. Élément structurel pour carrosserie de véhicule automobile, en particulier colonne B, comprenant :
une tôle extérieure (3) avec une paroi extérieure (7), deux parois latérales (8, 8') opposées l'une à l'autre et deux sections de bride extérieures (9, 9') qui en dépassent latéralement;
une tôle intérieure (4) avec une paroi intérieure (10), deux parois latérales (11, 11') opposées l'une à l'autre et deux sections de bride intérieures (12, 12') qui en dépassent latéralement;
un profilé de renfort (5) avec un fond de profilé (13), deux parois de profilé opposées (14, 14') l'une à l'autre et deux sections de liaison (15, 15') connectées à celles-ci ;
dans lequel, au moins dans une partie supérieure (Pa) de l'élément structurel (2), une hauteur de profilé maximale (H5) du profilé de renfort (5) est supérieure à une hauteur de profilé maximale (H3) de la tôle extérieure (3), et les sections de liaison (15, 15') du profilé de renfort (5) s'appuient contre la paroi intérieure (10) de la tôle intérieure (4), et les sections de bride extérieures (9, 9') et les sections de bride intérieures (12, 12') reposent directement les unes sur les autres et sont fixées les unes aux autres;
**caractérisé en ce que** les sections de liaison (15, 15') du profilé de renfort (5), du moins dans une partie inférieure (Pc) de l'élément structurel (2), sont fixées entre les sections de bride extérieures (9, 9') de la tôle extérieure (3) et les sections de bride intérieures (12, 12') de la tôle intérieure (4).

2. Élément structurel selon la revendication 1,
**caractérisé en ce que**
les sections de liaison (15, 15') sont fixées, notamment par liaison de matière, dans une partie sommitale (Pk) de l'élément structurel (2), laquelle partie sommitale est conçue pour être connectée à un longeron de toit du véhicule automobile, à la paroi intérieure (10) de la tôle intérieure (4).

3. Élément structurel selon la revendication 1 ou 2,
**caractérisé en ce que**
la partie supérieure (Pa) de l'élément structurel (2) dans laquelle la hauteur maximale de profilé (H5) du profilé de renfort (5) est supérieure à la hauteur maximale de profilé (H3) de la tôle extérieure (3) représente au moins 0,3 fois la longueur totale (L2) de l'élément structurel, en particulier au moins 0,4 fois la longueur totale (L2) de l'élément structurel.

4. Élément structurel selon une des revendications 1 à 3,
**caractérisé en ce que**
la hauteur maximale de profilé (H5) du profilé de renfort (5) est, du moins dans la partie supérieure (Pa) de l'élément structurel (2), supérieure à 0,9 fois la plus petite distance (H6) entre la paroi extérieure (7) et la paroi intérieure (10).

5. Élément structurel selon une des revendications 1 à 4,
**caractérisé en ce que**
les sections de liaison (15, 15'), du moins dans la partie supérieure (Pa), reposent en surface au niveau de la paroi intérieure (10) de la tôle intérieure (4).

6. Élément structurel selon une des revendications 1 à 5,
**caractérisé en ce que**
les sections de liaison (15, 15') du profilé de renfort (5), du moins dans une sous-section de la partie supérieure (Pa) de l'élément structurel (2), sont fixées, en particulier par liaison de matière, à la paroi intérieure (10) de la tôle intérieure (4).

7. Élément structurel selon une des revendications 1 à 5,
**caractérisé en ce que**
les sections de liaison (15, 15') du profilé de renfort (5), au moins dans une sous-section de la partie supérieure (Pa) de l'élément structurel (2), s'appuient sans fixation sur la paroi intérieure (10) de la tôle intérieure (4).

8. Élément structurel selon une des revendications 1 à 7,
**caractérisé en ce que**
les sections de liaison (15, 15'), du moins dans la zone dans laquelle elles s'appuient contre la paroi intérieure (10), présentent une largeur (B15) de moins de 20 mm, en particulier moins de 16 mm.

9. Élément structurel selon une des revendications 1 à 8,
**caractérisé en ce**
**qu'**au moins une des parois latérales (14, 14') du profilé de renfort (5), au moins dans une section transversale à travers la colonne B (2), circonscrit avec un plan (E1) perpendiculaire au bas du profilé (13), un angle (α14) qui est inférieur à 5°, en particulier inférieur à 2°.

10. Élément structurel selon une des revendications 1 à 9,
**caractérisé en ce que**,
au moins dans une section transversale de la partie supérieure (Pa) de l'élément structurel, une largeur moyenne entre les parois de profilé (14, 14') du profilé de renfort (5) est supérieure à 0,3 fois et/ou est inférieure à 0,7 fois une largeur moyenne entre les parois latérales (11, 11') de la tôle intérieure (4) .

11. Élément structurel selon une des revendications 1 à 10,
**caractérisé en ce que**
la paroi intérieure (10) de la tôle intérieure (4), du moins dans une partie centrale (Pb) de l'élément structurel, présente deux creux latéraux (17, 17') qui sont disposés adjacents aux sections de paroi latérale intérieures (11, 11') et s'étendent parallèlement à celles-ci,
au moins une des sections de liaison (15, 15') du profilé de renfort (5) s'appuie dans un des creux latéraux (17, 17').

12. Élément structurel selon une des revendications 1 à 11,
**caractérisé en ce que**
les sections de liaison (15, 15') du profilé de renfort (5), du moins dans une partie inférieure (Pc) de l'élément structurel (2), sont fixées entre les sections de bride extérieures (9, 9') de la tôle extérieure (3) et les sections de bride intérieures (12, 12') de la tôle intérieure (4), en particulier par correspondance de matière.

13. Élément structurel selon une des revendications 1 à 12,
**caractérisé en ce que**
la partie inférieure (Pc) de l'élément structurel (2), dans laquelle les sections de liaison (15, 15') du profilé de renfort (5) sont connectées aux sections de bride extérieure (9, 9') de la tôle extérieure (3) et aux sections de bride intérieures (12, 12') de la tôle intérieure (4), représente moins de 0,5 fois la longueur totale (L2) de l'élément structurel (2).

14. Élément structurel selon une des revendications 1 à 13,
**caractérisé en ce que**
la tôle intérieure (4) et/ou la tôle extérieure (3) sont déformées à froid et que le profilé de renfort (5) est déformé à chaud et durci.

15. Élément structurel selon une des revendications 1 à 14,
**caractérisé en ce**
**qu'**au moins un élément parmi la tôle intérieure (4) et le profilé de renfort (5) présente une épaisseur variable (D) sur sa longueur (L).

16. Élément structurel selon une des revendications 1 à 15,
**caractérisé en ce que**
les sections de bride extérieures (9, 9') et les sections de bride intérieures (12, 12') de la partie supérieure (Pa) de l'élément structurel (2) sont décalées par rapport à un plan médian s'étendant entre la paroi intérieure (10) et la paroi extérieure (7) en direction de la paroi extérieure (7) de la tôle extérieure (3), et que
les sections de bride extérieures (9, 9') de la tôle extérieure (3) et les sections de bride intérieures (12, 12') de la tôle intérieure (4), dans la partie inférieure (Pc) de l'élément structurel (2), sont décalées par rapport au plan médian en direction de la paroi intérieure (10) de la tôle intérieure (4).
